# EUROPEAN PATENT SPECIFICATION

(11) **EP 1 968 318 B1**
(45) Date of publication and mention of the grant of the patent: **07.05.2014**
(21) Application number: 05822860.2
(22) Date of filing: 27.12.2005
(51) Int. Cl.: H04N 7/173, H04N 7/14

(54) **DISTRIBUTION APPARATUS AND PLAYBACK APPARATUS**
VERTEILUNGSVORRICHTUNG UND WIEDERGABEVORRICHTUNG
APPAREIL DE DISTRIBUTION DE CONTENU ET APPAREIL DE LECTURE DE CONTENU

(43) Date of publication of application: 10.09.2008
(73) Proprietor: MITSUBISHI ELECTRIC CORPORATION, Chiyoda-ku Tokyo 100-8310 (JP)
(72) Inventor: HANADA, Takehiko c/o Mitsubishi Electric Corporation, Tokyo 100-8310 (JP); IMAI, Shigeru c/o Mitsubishi Electric Corporation, Tokyo 100-8310 (JP); MIURA, Shin c/o Mitsubishi Electric Corporation, Tokyo 100-8310 (JP); MATSUBARA, Masami c/o Mitsubishi Electric Corporation, Tokyo 100-8310 (JP); AKATSU, Shinji c/o Mitsubishi Electric Corporation, Tokyo 100-8310 (JP)
(74) Representative: Pfenning, Meinig & Partner GbR
(86) International application number: PCT/JP2005/023944
(87) International publication number: WO 2007/074520

(56) References cited:
- EP-A- 1 519 583
- WO-A-2005/062614
- JP-A- 2004 221 918
- JP-A- 2005 086 362
- US-A1- 2003 208 767
- US-A1- 2003 236 895

## Description

### TECHNICAL FIELD

The present invention relates to a distribution apparatus for receiving transmission data of video, audio and the like and for storing them as playback data, and to a playback apparatus for receiving the playback data distributed from the distribution apparatus and for playing back the data to the video, audio and the like.

### BACKGROUND ART

In recent years, it has become common practice to record television (abbreviated as TV from now on) broadcasts on random access storage media such as DVDs (Digital Versatile Disks) and hard disks. Patent Document 1 and Patent Document 2 describe time-shift playback of recorded contents using a random access storage medium.

Inarandomaccessstoragemedium, it is possible to designate an address for storing a broadcasting program and an address for playing back the program contents individually. Therefore even during recording a broadcasting program, as for program contents already recorded, special playback such as fast playback, partly cut video playback, rewinding playback, slow-motion playback, and time-shift playback is possible by manipulating the proceeding speed or proceeding direction of the playback address.

Patent Document 1: Japanese Patent Laid-Open No. 7-264529/1995; and
Patent Document 2: Japanese Patent Laid-Open No. 2000-350130.

For example, to perform special playback such as time-shift playback during recording of a broadcasting program into a storage device, it is necessary for a playback section to set an extent of the program contents that have already been stored in the storage device and are ready for playback to prevent an error from occurring during the playback.

On the other hand, the time-shift playback is possible by connecting, for example, distribution apparatuses with a function of receiving and storing one or both of the video data and audio data of a broadcasting program with a playback apparatus with a function of playing back the data about the broadcasting program stored in the distribution apparatuses via a communication network that enables mutual data communications, and by enabling a single playback apparatus to receive the data about the broadcasting program stored and distributed by the plurality of distribution apparatuses on the communication network.

In this system configuration, it is also necessary as described above that the extent of the program contents, which have already been stored in the distribution apparatus and are ready for distribution to the playback apparatus, is set in the playback apparatus. To achieve this, communication is carried out between the playback apparatus and the distribution apparatus via the communication network for notifying of the extent of the program contents that can be distributed. WO 2005/062614 discloses a system in which a client requests a range of data from a distribution server. JP 2005 086362, on the other hand, discloses a method for querying a distribution server for the available data range by a client.

The foregoing communication, however, takes time to process a communications protocol generated anew and to transmit the information. Thus, when the distribution apparatus records the video data and audio data and distributes them via the communication network, and the playback apparatus plays back them, a problem arises of damaging real-time property between the video data and audio data stored in the distribution apparatus and the video and audio played back by the playback apparatus.

The present invention is implemented to solve the foregoing problem. Therefore it is an object of the present invention to provide a distribution apparatus and a playback apparatus capable of reducing communication volume and communication duration for notifying of the extent of the data that can be distributed at the playback that is carried out by distributing video data, audio data and the like via a communication network with storing these data, for example.

### DISCLOSURE OF THE INVENTION

The scope of the invention is as disclosed in the independent claims. With such a configuration, it offers an advantage of being able to reduce the communication volume and communication duration for notifying of the distributable data range at the time of storing the transmission data such as video data and audio data into the storage section and distributing the data via the communication network to be played back. This makes it possible to suppress the damage of the real-time property between the data being stored and the contents playedback even in the case where the transmission data such as video data and audio data are being stored to be played back via the communication network.

### BRIEF DESCRIPTION OF THE DRAWINGS

FIG. 1 is a diagram showing a configuration of a network system including a distribution apparatus and a playback apparatus of an embodiment 1 in accordance with the present invention;
FIG. 2 is a block diagram schematically showing, a configuration of the distribution apparatus in FIG. 1;
FIG. 3 is a block diagram schematically showing a configuration of the playback apparatus in FIG. 1; and
FIG. 4 is a block diagram schematically showing a configuration of the playback apparatus of an embodiment 2 in accordance with the present invention.

### BEST MODE FOR CARRYING OUT THE INVENTION

The best mode for carrying out the invention will now be described with reference to the accompanying drawings to explain the present invention in more detail.

### EMBODIMENT 1

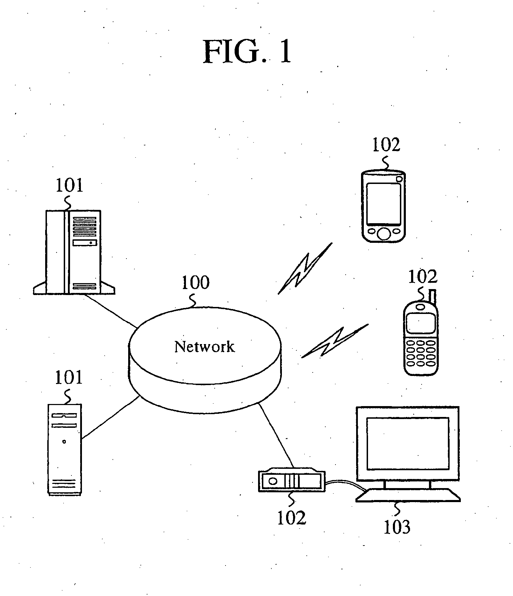

FIG. 1 is a diagram showing a configuration of a network system including a distribution apparatus and a playback apparatus of an embodiment 1 in accordance with the present invention. To a network (communication network) 100, distribution apparatuses 101 and playback apparatuses 102 are connected. As for the network 100, it can be a wire or wireless network regardless of its physical form. In addition, as long as the apparatuses are in a state capable of carrying out communication according to a specified protocol such as TCP/IP (Transmission Control Protocol/Internet Protocol), they are considered to be connected to the network 100.

It is assumed in the embodiment 1 that at least one distribution apparatus 101 and one playback apparatus 102 are connected to the network 100 although their numbers are not specified. The distribution apparatuses 101 receive content data (transmission data) of TV broadcasting, radio broadcasting, video distribution or music distribution via the Internet, and store the content data in their internal storage sections.

In addition, the distribution apparatuses 101 distribute via the network 100 the contents requested to distribute from among the stored content data (playback data) by the playback apparatus 102. The distribution apparatuses 101 are embodied by applying the present invention to recording playback apparatuses of TV broadcasts and the like, which are able to communicate with the playback apparatuses 102 via the network 100, for example. Besides, as the distribution apparatuses 101, such an apparatus is also possible which has, in addition to the recording playback apparatus including a hard disk drive for recording TV broadcasting programs, a memory for temporarily storing the received content data for several seconds to several minutes, for example, and distributes the data stored in the memory immediately.

The playback apparatuses 102 request the distribution apparatuses 101 to distribute contents, and play back the content data the distribution apparatuses 101 distribute with receiving them. The playback apparatuses 102 are embodied in a mobile phone or a mobile communication terminal connected to the network 100 via radio communications as shown in FIG. 1. Besides, such a case is also conceivable in which they are configured as an information communication terminal that is connected to the network 100 via communication through wire, receives and plays back the content data distributed from the distribution apparatus 101, and displays on a monitor 103.

Incidentally, the term "contents" in the present invention refers to at least one of video and audio information. In addition, the term "content data", which means transmission data received by the distribution apparatuses 101, refers to at least one of the video data that can be played back to images by the playback apparatuses 102 and the audio data that can be played back to voices. As for a protocol used for distribution requests for the contents from the playback apparatuses 102 and used for the content distribution by the distribution apparatuses 101, HTTP (HyperText Transfer Protocol) is employed, for example.

In this case, the contents stored in the distribution apparatus 101 and distribution apparatus 101 are identified by URI (Uniform Resource Identifiers). Accordingly, the playback apparatuses 102 make a connection with the distribution apparatus 101 designated by URI using TCP/IP, and request for the contents designated by URI according to an HTTP request message.

In the case of making a partial distribution request for the contents, the playback apparatuses 102 add to the HTTP request message an HTTP range header for designating the range of the distribution request contents or a header the distribution apparatus 101 can recognize.

The playback apparatuses 102 can assign the distribution request range of the contents to the distribution apparatus 101 by inserting information about the range of the contents requested to be distributed into the header added to the HTTP request message, and by transmitting it to the distribution apparatus 101. The header described above is referred to as a "distribution range designating header" from now on. The distribution range designating header, for example, can specify the content range from 500 seconds to 600 seconds by setting as "Time-Range: time = 500 - 600".

When requesting notification of the range of the contents which have already been stored in the distribution apparatuses 101 and are available for distribution, the playback apparatuses 102 add the header the distribution apparatuses 101 can recognize to the transmission data to the distribution apparatuses 101, thereby notifying them of the range. For example, the header for requesting the notification of the distributable content range is named "Request-Current-Range", and the value of the header is set at "TRUE". Such a header is referred to as a "distributable range request header" from now on.

For the content distribution request from the playback apparatuses 102, the distribution apparatuses 101 transmit the distribution request range of the contents requested to be distributed by using an HTTP response message. In this case, if the notification of the distributable content range is requested using the distributable range request header as described above, for example, the distribution apparatuses 101 insert the information for notifying of the distributable content range into the header added to the HTTP response message, and transmit to the playback apparatuses 102.

For example, assume that the header for notifying of the distributable content range is named "current-range", and the value of the header is set at "byte = start position - end position" to represent the start position and end position of the distributable contents which have already been stored in units of bytes. Alternatively, the value of the header is set at "time = start position - end position" to represent the start position and end position of the distributable content data which have already been stored in units of time such as hours, minutes, and seconds. Such a header is referred to as a "distributable range notification header" from now on.

Although the present embodiment 1 is described under the assumption that it employs HTTP as the protocol for transmitting the content data, any protocols other than HTTP are also available as long as they enable the distribution request for the specified range of the contents and expansion of the header portion. In addition, although the present embodiment 1 is described under the assumption that it employs URI for identifying the contents, using identifying methods other than URI is also possible as long as the distribution apparatus 101 and distribution apparatus 101 can identify the distributable contents.

Next, the operation of the distribution apparatus 101 will be described.

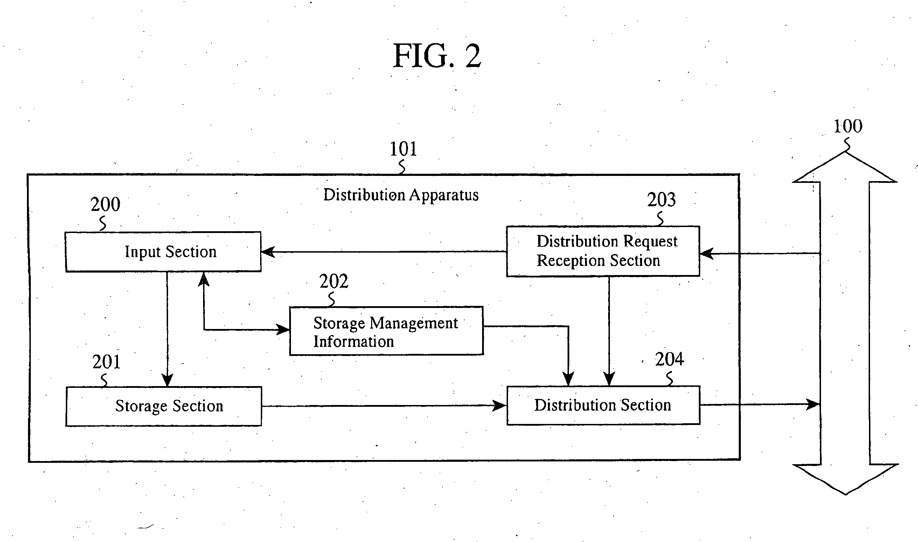

FIG. 2 is a block diagram schematically showing a configuration of the distribution apparatus of FIG. 1, with reference to which the operation of the distribution apparatus 101 will be described. In FIG. 2, blocks equivalent in their functions to the blocks in the network configuration as shown FIG. 1 are designated by the same reference numerals and their description will be omitted.

An input section 200 is a section for receiving the content data consisting of a specific program acquired from broadcasting such as TV broadcasting, and for storing the content data in a storage section 201. The input section 200 can be embodied in a section which enables a receiving apparatus such as a tuner for receiving the TV broadcasting and software for controlling its operation or signal processing to operate in corporation. A configuration is also possible which receives the content data from radio broadcasting, or from video distribution or music distribution via the Internet besides the TV broadcasting.

In addition, the input section 200 successively stores the contents into the storage section 201 with receiving the content data. In this case, the input section 200 records in storage management information 202 a position on the contents represented in units of bytes and a stored location in the storage section 201 represented in units of bytes as the range of the contents stored in the storage section 201. For example, the content data, as to which the stored contents are defined from the start position to the end position in units of bytes, and the individual stored locations in the storage section 201, at which the content data are stored and which are defined in units of bytes, are stored with establishing correspondence between them.

Furthermore, concerning the contents in the range stored in the storage section 201, the input section 200 prepares a correspondence table between the time on the contents and the stored locations on the storage section 201, and adds the table to the storage management information 202. For example, it defines the stored contents from the start point of time to the end point of time in units of time, and stores the correspondence table that establishes correspondence between the individual time and the stored locations in the storage section 201 at which the data corresponding to the contents at the individual time are stored.

Here, the storage management information 202 is information for managing the contents stored in the storage section 201. The input section 200 can write information about the contents into the storage management information 202 or erase the information therefrom, and a distribution section 204 can refer to its contents. The storage management information 202 can be arranged on the storage section 201, for example.

When the contents are erased from the storage section 201, the input section 200 deletes from the storage management information 202 the foregoing correspondence table about the contents in the range erased. The deleting processing of the correspondence table enables only the range of the contents stored in the storage section 201 to have the correspondence table in the storage management information 202. Such a correspondence table is referred to as "time-position correspondence table" from now on.

In this way, the storage management information 202 for specifying the stored location of the contents in units of time and in units of bytes are stored in the storage section 201. Thus, regardless of whether the unit for designating a particular range of the contents is byte or time, referring to the storage management information 202 makes it possible to determine the storage area in the storage section 201 in which the particular range of the contents are stored.

The time-position correspondence table is a table that arranges, for the entire time information or for part of the time information in the contents, the combination of the time information embedded in the content data and the stored location in the storage section 201 at which the front portion of the data structure containing the time information is stored.

For example, when the content data stream is MPEG-2TS, the values of the time information PCR (Program Clock Reference) included in the contents are read; and for all or part of the PCR, the combinations are arranged of the PCR and the stored locations in the storage section 201 at which the first one byte of each transport stream packet, the data structure including the PCR, is stored.

Here, the unit of the PCR can be converted to time units such as hours, minutes, and seconds. By thus doing, as for any arbitrary time, searching for the PCR indicating the closest time to it from the time-position correspondence table, and reading the stored location in the storage section 201 that makes a group with the PCR make it possible to specify the stored location in the storage section 201 at which the content data corresponding to the time is stored.

Here, the playback apparatus 102 can play back the contents more easily by placing the stored location in the storage section 201, which is to be combined with the time information, at the top of the data structure constituting the units of the playback processing. For example, when the content data stream is MPEG-2TS, the time-position correspondence table is arranged from the combinations of the PCR and the stored locations in the storage section 201 at which the values of the front portions of the GOPs (Groups Of Pictures), drawing units in the playback processing, are stored, rather than the values of the front portions of the transport stream packets described above.

In addition, although the example of arranging the time-position correspondence table using the PCR as the time information is shown above, one of the PTS (Presentation Time Stamp) and DTS (Decoding Time Stamp), which are the time information contained in the MPEG-2 stream, can also be used. For example, the input section 200 reads the values of the PTS (or DTS) included in the contents, and arranges for all or part of the PTS (or DTS) the combinations of the PTS (or DTS) and the stored locations in the storage section 201 at which the first one byte of each transport stream packet, the data structure including the PTS (or DTS), is stored. Then, as for any arbitrary time, searching for the PTS (or DTS) indicating the closest time to it from the time-position correspondence table, and reading the stored location in the storage section 201 that makes a group with the PTS (or DTS) make it possible to specify the stored location in the storage section 201 at which the content data corresponding to the time is stored.

The storage section 201 is a section for storing the content data received by the input section 200 regardless of whether storing temporarily or semi-permanently. For example, in addition to the semipermanent storage such as recording broadcasting programs and the like, such a case is conceivable which stores temporarily for several seconds to several minutes. Furthermore, a memory such as a DRAM or SRAM can also be used as the storage section 201 to form a ring buffer. To successively store the content data in the storage section 201, the content data can overwrite the content range already stored. In addition, using a large-capacity hard disk as the storage section 201 will make it possible to store the content data within the limit of the capacity.

A distribution request reception section 203 accepts an HTTP request message which is a content distribution request from the playback apparatus 102, and asks the distribution section 204 for the distribution of the contents corresponding to the HTTP request message. More specifically, the distribution request reception section 203, receiving the HTTP request message from the playback apparatus 102, notifies the input section 200 to receive the content data requested to be distributed by the HTTP request message, and to store the content data in the storage section 201.

According to the notification, as described before, the input section 200, receiving the content data requested to be distributed, successively stores the content data in the storage section 201, and records in the storage management information 202 the positions on the contents represented in units of bytes, and the stored locations on the storage section 201 represented inunits of bytes as the range of the stored contents. Furthermore, as for the contents within the range stored in the storage section 201, the input section 200 prepares the correspondence table between the time on the contents and the stored locations on the storage section 201, and adds the table to the storage management information 202.

Next, the distribution request reception section 203 reads the range of the contents designated by the distribution range designating header of the HTTP request message received, and notifies the distribution section 204 of the range. In addition, when the HTTP request message received from the playback apparatus 102 includes the distributable range request header, the distribution request reception section 203 notifies the distribution section 204 to transmit the distributable range notification header to the playback apparatus 102.

The distribution section 204 reads from the storage section 201 the content data within the range notified by the distribution request reception section 203, places the content data on the HTTP response message, and distributes them to the playback apparatus 102. In this case, the distribution section 204 determines the location where the content data within the notified range is stored in the storage section 201 by referring to the storage management information 202.

Furthermore, the distribution section 204 does not distribute the contents in the range the storage section 201 does not store. Thus, to notify the playback apparatus 102 of the actually distributed range of the contents, the distribution section 204 adds to the HTTP response message a notification header of the distribution range which carries the information about the content range, and transmits the notification header to the playback apparatus 102. Such a header is referred to as a "distribution range notification header" from now on.

The case will be described where the distribution request reception section 203 notifies the distribution section 204 to transmit the distributable range notification header to the playback apparatus 102. In this case, when the distribution section 204 places the content data on the HTTP response message and distributes them to the playback apparatus 102, it refers to the storage management information 202, reads the information about the range of the contents stored in the storage section 201, sets it in the distributable range notification header, and places the header on the HTTP response message. Here, the term "information about the range of the contents" refers to the information that defines the content data from beginning to end of the contents stored in the storage section 201 in units of time or bytes.

Next, the operation of the playback apparatus 102 will be described.

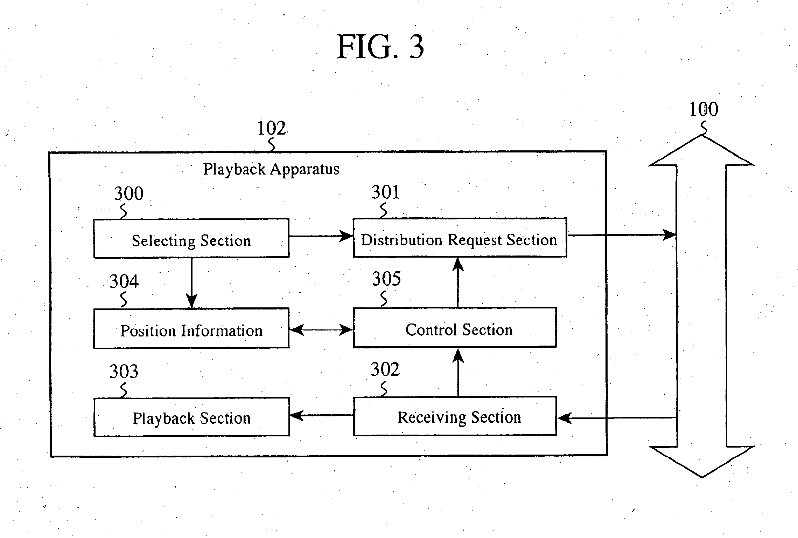

FIG. 3 is a block diagram schematically showing a configuration of the playback apparatus of FIG. 1, with reference to which the operation of the playback apparatus will be described. In FIG. 3, the components having functions equivalent to the components of the network configuration shown in FIG. 1 are designated by the same reference numerals, and their duplicate description will be omitted.

A selecting section 300 is a section for a user of the playback apparatus 102 to set and input playback conditions such as contents to be played back and a playback start position. The selecting section 300 is embodied in a section that enables a display unit not shown, a setting and inputting device using key input or the like, and software for controlling signal processing by using these devices to operate in cooperation.

In addition, the selecting section 300 maintains the metadata on the contents, and shows the user a list of the metadata on the contents through a GUI (Graphical User Interface) or the like so that the user can decide the contents to be played back and the playback start position. It is assumed here that the metadata on the contents of the present embodiment 1 includes the URI of the contents.

When theURI of the content data is selectedas the information for specifying the contents to be played back, the selecting section 300 notifies a distribution request section 301 of the URI of the content data selected. In addition, when the playback start position of the content data selected is selected, the selecting section 300 writes the playback start position of the contents in position information 304.

Using HTTP, the distribution request section 301 transmits an HTTP request message for requesting to distribute the content data designated by the URI to the distribution apparatus 101 designated by the URI notified by the selecting section 300. In this case, the distributable range request header is included in the HTTP request message. In addit ion, the range of the contents requested to be distributed is assumed to be designated by a control section 305. As for the unit in this case, it is assumed to be the unit employed by the control section 305 to designate the range.

According to HTTP, a receiving section 302 receives the HTTP response message including the distribution range notification header and content data from the distribution apparatus 101 via the network 100. In addition, when having transmitted the distributable range request, the receiving section 3 02 receives, according to HTTP, the HTTP response message including the distributable range notification header and content data from the distribution apparatus 101.

Receiving the distribution range notification header in the HTTP response message, the receiving section 302 notifies the control section 305 of the information about the content range informed by the distribution range notification header. Furthermore, receiving the distributable range notification header, the receiving section 302 notifies the control section 305 of the information about the distributable range informed by the distributable range notification header. In addition, the content data receivedvia the HTTP response message is supplied from the receiving section 302 to a playback section 303 to be played back successively.

The position information 304 records the position on the contents in units of bytes and in units of time. The position information 304 makes it possible in the case of motion video contents, for example, to specify the video contents corresponding to the position on the motion video determined in units of playback time, and to specify the video contents corresponding to the position on the motion video in units of playback information volume (in units of bytes). The position information 304 allows the information about the contents selected by the selecting section 300 to be written, and the control section 305 can refer to the contents. The information is stored in a storage section not shown which is accessible by the selecting section 300 and control section 305, for example.

The control section 305 notifies the distribution request section 301 to make a request to the distribution apparatus 101 to distribute the contents within a prescribed range from the position on the contents specified by referring to the position information 304. As the unit of the range of the contents to be sent to the distribution request section 301, the unit of the position on the contents recorded in the position information 304 is used.

If the receiving section 302 notifies it of the distributable range, the control section 305 limits the range of the contents requested to be distributed by the distributable range. As the range of the contents requested to be distributed, even the entire contents are allowed, for example. If the content data is MPEG-2 encoded data, the range can be the length of GOP or the length including a piece of picture.

As foramethodof limiting the range of the contents requested to be distributed by the distributable range, it limits to the range common to the range of the contents requested to be distributed and the distributable range. In this case, unless the common range is present, this can be made an error, or the distributable range itself can be set as the range of the contents requested to be distributed.

Furthermore, the control section 305 updates the contents of the position information 304 by overwriting the contents with the end value of the distribution range notified by the receiving section 302. The end value becomes the start value of the contents at the time when designating the distribution range continuously. Unless the distribution range is notified by the receiving section 302, the control section 305 updates the contents of position information 304 by the end value of the range of the contents requested to be distributed informed to the distribution request section 301.

As described above, according to the present embodiment 1, the playback apparatus 102 inserts the distribution range designating header into the HTTP request message for requesting the distribution of the contents, and transmits it to the distribution apparatus 101 via the network 100. The distribution apparatus 101 inserts the data within the range specified by the distribution range designating header among the content data stored in the storage section 201 into the HTTP response message, and distributes to the playback apparatus 102 that originates the distribution request via the network 100. Thus inserting the content data and the information about the designation of the distribution range into the HTTP request message and into the response message to it can prevent new communications other than the communications required for the distribution request and distribution of the contents from occurring between the distribution apparatus 101 and the playback apparatus 102. Accordingly, even if the contents are played back via the network while storing them in the storage section 201, the present embodiment 1 can suppress the occurrence of a factor that will damage the real-time property between the stored contents and the played back contents. This enables streaming playback of video and audio live contents, for example.

### EMBODIMENT 2

The present embodiment 2 corrects the range of the contents requested to be distributed considering the delay from the time the playback apparatus transmits the distribution request of the contents to the distribution apparatus to the time it receives the content data.

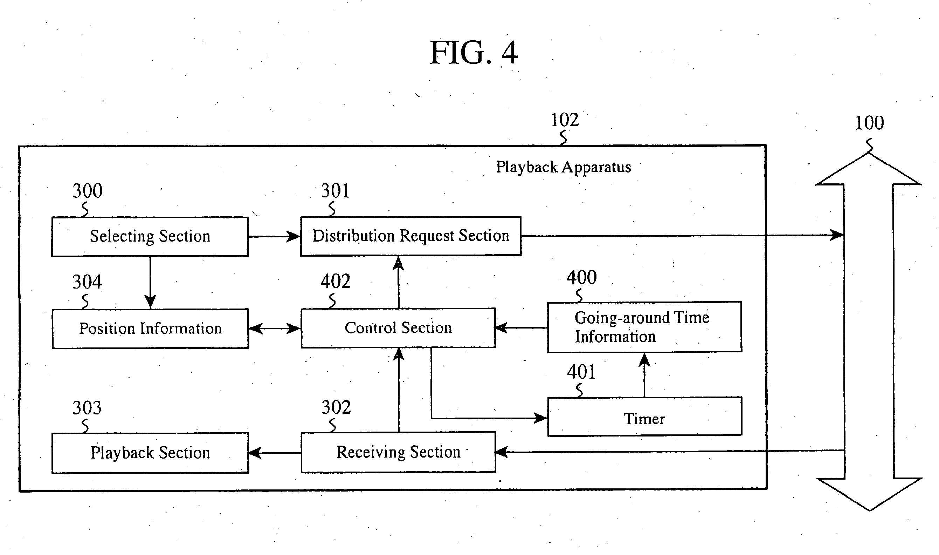

FIG. 4 is a block diagram schematically showing a configuration of the playback apparatus of the embodiment 2 in accordance with the present invention. In FIG. 4, the components with the functions equivalent to the components shown in FIG. 3 are designated by the same reference numerals, and their duplicate description will be omitted. Going-around time information 400 is information that represents in units of time the duration from the time when the control section 402 notifies the distribution request section 301 of making a content distribution request to the time when the receiving section 302 actually receives the content data.

In addition, the going-around time information 400 is information into which a timer 401 can write time information, and the contents of which the control section 402 can refer to. The going-around time information 400 is stored in a storage section not shown provided in the playback apparatus 102, for example. As for the timer 401, the control section 402 controls the start and stop of its time measurement. The timer 401 measures the duration from the time when the control section 402 notifies the distribution request section 301 of the content distribution request to the time when the receiving section 302 receives the content data, and records measurement results as the going-around time information 400.

The control section 402 has the functions similar to the functions of the control section 305 of FIG. 1 described in the foregoing embodiment 1. The control section 402 differs from the control section 305 in FIG. 1 in the operation that according to the going-around time information 400 it corrects errors of the distributable range resulting from the transmission delay in the network 100, from the delay due to processing in the distribution apparatus 101, and from the delay due to processing by the playback apparatus 102 itself.

Next, the operation will be described.

It will be explained with reference to FIG. 4 in addition to FIG. 1 described in the foregoing embodiment 1.

First, when notifying the distribution request section 301 of the distribution request for the contents, the control section 402 carries out the start control of the time measurement by the timer 401. Thus, the timer 401 starts the time measurement from the time when the control section 402 notifies the distribution request section 301 of the request for the distributable range of the contents.

In addition, as in the foregoing embodiment 1, when making the distributable range request to the distribution apparatus 101, the receiving section 302 receives, according to HTTP, the HTTP response message including the distributable range notification header and content data from the distribution apparatus 101. In this case, the receiving section 302 notifies the control section 4 02 of the information about the distributable range notified via the distributable notification header.

Notified by the receiving section 302 of the distributable range, the control section 402 carries out the end control of the time measurement by the timer 4 01. Thus, the timer 4 01 measures the duration from the time when the control section 402 notifies the distribution request section 301 of making the distribution request for the contents to the distribution apparatus 101 to the time when the content data is received via the HTTP response message. The timer 401 records the measurement result in the going-around time information 400.

Referring to the time recorded in the going-around time information 400, the control section 402 adds the time to the start time of the distributable range notified by the receiving section 302 as correcting time. This makes it possible to correct the errors of the distributable range resulting from the transmission delay in the network 100, from the delay due to processing in the distribution apparatus 101, and from the delay due to processing by the playback apparatus 102 and the like.

After that, the control section 402 notifies the distribution request section 301 to request the distribution apparatus 101 to distribute the contents within the distributable range corrected as described above from the position on the contents recorded in the position information 304.

According to the notification, the distribution request section 301, using the HTTP, transmits an HTTP request message for requesting to distribute the content data designated by the URI to the distribution apparatus 101 designated by the URI notified by the selecting section 300. In this case, the distributable range corrected by the control section 402 as described above is set in the distribution range designating header to be included in the HTTP request message.

The distribution apparatus 101, which receives the HTTP request message from the playback apparatus 102, operates in the same manner as in the foregoing embodiment 1, and distributes the contents in accordance with the distributable range corrected. In this way, the playback apparatus 102 can play back the contents in the playback conditions whose errors due to the foregoing delays are corrected. For example, when the distribution apparatus 101 distributes the content data while storing it, the playback apparatus 102 can play back the contents without damaging the real-time property between its contents and the contents stored in the distribution apparatus 101.

As described above, according to the present embodiment 2, the playback apparatus 102 corrects the transmission delay in the network 100, the delay due to the processing in the distribution apparatus 101, and the delay due to the processing by the playback apparatus 102, which are included in the distributable range notified by the distribution apparatus 101. This makes it possible to suppress the distribution request for the contents out of the range the distribution apparatus 101 can distribute, thereby being able to reduce a useless communication volume.

### EMBODIMENT 3

The configuration of the playback apparatus of the present embodiment 3 is basically the same as that of FIG. 3 shown in the foregoing embodiment 1 and that of FIG. 4 shown in the foregoing embodiment 2. It differs from the configurations of the foregoing embodiments in that the control section carries out the processing for the special playback at the time of updating the position information that stores the position on the contents.

More specifically, as additional functions of the control section 305 shown in FIG. 3 in the foregoing embodiment 1, and of the control section 402 shown in FIG. 4 in the foregoing embodiment 2, the control section of the present embodiment updates the position information 304 using the value obtained by adding a prescribed offset value to the end value of the distribution range notified by the receiving section 302, or using the value obtained by subtracting a prescribed offset value from the start value of the distribution range notified by the receiving section 302. Alternatively, without adding or subtracting the offset value, it can insert a delay into the range of the contents requested to be distributed before notifying the distribution request section 301 to make a distribution request.

For example, in the case where the content data is encoded data according to MPEG, and when the control section updates the contents of the position information 304, the control section makes the length of the content range to be informed to the distribution request section 301 equal to the length of the GOP, and updates them by making the offset to be added to the end value of the distribution range notified by the receiving section 302 equal to the length of the GOP subsequent to the foregoing GOP. Thus, 2X playback is achieved. On the contrary, by subtracting the length equal to two GOPs from the start value of the distribution range notified by the receiving section 302, -2X is achieved.

In addition, by making the content range to be informed to the distribution request section 301 equal to the length of the GOP, by making the offset equal to zero, and by inserting the delay of time corresponding to the length of the foregoing GOP, 1/2X is achieved. On the contrary, -1/2X is achieved by making the content range to be informed to the distribution request section 301, the offset, and the length of the delay equal to the length of the GOP. In this case, as for the length of the offset, it need not be equal to the length of the GOP, but can be set at the length of an MPEG picture, or at a range from several seconds to several hours.

As described above, according to the present embodiment 3, the control section of the playback apparatus provides the offset corresponding to the playback speed or inserts the delay at the time of updating the value of the position information 304 in accordance with the contents of the special playback. Thus, in response to this and according to the data distributed by the distribution apparatus 101, the playback section 303 can carry out fast playback and rewinding playback, and frame-by-frame playback and reverse frame-by-frame playback.

### INDUSTRIAL APPLICABILITY

As described above, in the case where the distribution apparatus in accordance with the present invention stores video data or audio data and distributes the data via the network, and the playback apparatus plays back the data, the distribution apparatus can reduce the communication volume and communication duration for notifying the playback apparatus of the distributable data range. Thus, the distribution apparatus is suitable for a system for carrying out streaming playback of video or audio live contents.

## Claims

1. A distribution apparatus for distributing playback data to a playback apparatus via a communication network, said distribution apparatus comprising:
an input section being adapted to receive transmission data;
a storage section being adapted to store the transmission data received by said input section as the playback data;
a distribution request reception section being adapted to accept from said playback apparatus a distribution request message including information for designating a distribution range of the playback data via said communication network; and
a distribution section being adapted to distribute, when an information on a request to notify the playback apparatus of a distributable range of playback data stored by the storage section is in the accepted distribution request message, an information on said distributable range and the playback data corresponding to the distribution range designated by the information in said accepted distribution request message to the playback apparatus through the communication network by including said information on the distributable range and said playback data corresponding to the distribution range with a response message responding to said accepted distribution request message.

2. The distribution apparatus according to claim 1, wherein
said storage section is adapted to store information that defines the stored playback data in at least one of units of time and units of information volumes and a stored location at which the playback data specified by the information is stored with establishing correspondence between the information and the stored location; and
said distribution section is adapted to specify in said storage section the playback data corresponding to the information for designating the distribution range included in the distribution request message according to the correspondence in said storage section.

3. The distribution apparatus according to claim 1, wherein
the playback data is MPEG encoded data;
said storage section is adapted to store one of PCR (Program Clock Reference), PTS (Presentation Time Stamp) and DTS (Decoding Time Stamp), which are time information included in the stored playback data, and a stored location at which a top value of GOP (Group Of Pictures) of the playback data corresponding to the time specified by the time information is stored, with establishing correspondence between one of the PCR, PTS and DTS and the stored location; and said distribution section is adapted to specify in said storage section the playback data corresponding to the information for designating the distribution range included in the distribution request message according to the correspondence in said storage section.

4. A playback apparatus for receiving and playing back playback data distributed from a distribution apparatus via a communication network, said distribution apparatus being adapted to receive transmission data and to store the transmission data as the playback data, said playback apparatus comprising:
a distribution request section being adapted to transmit, when an information on a distributable range of playback data stored in the distribution apparatus is in a response message from the distribution apparatus, an information indicating a range common to said distributable range and being utilized for designating a distribution range of the stored playback data to the distribution apparatus through the communication network by including said information with a distribution request message;
a receiving section being adapted to receive a response message from the distribution apparatus responding to the distribution request message including playback data corresponding to the distribution range designated by the distribution request message;
a playback section being adapted to play back the playback data received by said receiving section; and
a control section being adapted to time a time from requesting the distribution apparatus to distribute playback data until receiving the playback data corresponding to said request, to correct the distributable range by using a result of said timing, and to notify the distribution request section to request the distribution apparatus to distribute playback data corresponding to the corrected distributable range.

5. The playback apparatus according to claim 4, wherein
said control section is adapted to recognize a range of the playback data to be requested to distribute from the distribution apparatus at least one of units of time and units of information volumes.

6. The playback apparatus according to claim 5, wherein
said control section is adapted to set an offset to the playback data to be played by the playback section, or to insert a delay into the playback data to be requested to distribute from the distribution apparatus in accordance with a type of a special playback.

## Patentansprüche

1. Verteilungsgerät zum Verteilen von Playbackdaten zu einem Playbackgerät über ein Kommunikationsnetzwerk, wobei besagtes Verteilungsgerät aufweist:
einen Eingabeabschnitt angepasst zum Empfangen von Übertragungsdaten;
einen Speicherabschnitt angepasst zum Speichern der Übertragungsdaten, die durch besagten Eingabeabschnitt empfangen wurden, als die Playbackdaten;
einen Verteilungsanforderungsempfangsabschnitt angepasst zum Annehmen einer Verteilungsanforderungsnachricht von besagtem Playbackgerät, die Informationen zum Bezeichnen eines Verteilungsbereiches der Playbackdaten über besagtes Kommunikationsnetzwerk enthält; und
einen Verteilungsabschnitt der angepasst ist zum Verteilen, wenn eine Information über eine Anforderung zum Benachrichtigen des Playbackgerätes von einem verteilbaren Bereich von Playbackdaten, die durch den Speicherabschnitt gespeichert sind, in der akzeptierten Verteilungsanforderungsnachricht ist, einer Information über besagten verteilbaren Bereich und der Playbackdaten, die zu dem Verteilungsbereich korrespondieren, der durch die Information in besagter akzeptierter Verteilungsanforderungsnachricht bezeichnet ist, an das Playbackgerät durch das Kommunikationsnetzwerk durch Einbinden besagter Informationen über den verteilbaren Bereich und besagter Playbackdaten, die zu dem Verteilungsbereich korrespondieren, mit einer Antwortnachricht, die auf besagte akzeptiere Verteilungsanforderungsnachricht antwortet.

2. Verteilungsgerät nach Anspruch 1, wobei besagter Speicherabschnitt angepasst ist zum Speichern von Information, die die gespeicherten Playbackdaten in zumindest einer von Einheiten von Zeit und Einheiten von Informationsvolumina definiert, und eines gespeicherten Ortes, an welchem die durch die Information spezifizierten Playbackdaten gespeichert sind, mit Etablierung einer Beziehung zwischen der Information und dem gespeicherten Ort;
und
besagter Verteilungsabschnitt angepasst ist zum Spezifizieren in besagtem Speicherabschnitt der Playbackdaten, die zu der Information zum Bezeichnen des Verteilungsbereiches, die in der Verteilungsanforderungsnachricht enthalten ist, korrespondieren entsprechend der Beziehung in besagtem Speicherabschnitt.

3. Verteilungsgerät nach Anspruch 1,
wobei
die Playbackdaten MPEG kodierte Daten sind;
besagter Speicherabschnitt angepasst ist zum Speichern eines von PCR (program clock reference, Programm-Uhr-Referenz), PTS (presentation times damp, Präsentationszeitstempel) und DTS (decoding time stamp, Dekodierungszeitstempel), die Zeitinformationen sind, die in den gespeicherten Playbackdaten enthalten sind, und eines gespeicherten Ortes, an welchem ein Topwert von GOP (group of pictures, Gruppe von Bildern) der zu der durch die Zeitinformation spezifizierten Zeit korrespondierenden Playbackdaten gespeichert ist, mit Etablierung einer Beziehung zwischen einem der PCR, PTS und DTS und dem gespeicherten Ort; und
besagter Verteilungsabschnitt angepasst ist zum Spezifizieren in besagtem Speicherabschnitt der Playbackdaten, die zu der Information zum Bezeichnen des Verteilungsbereiches korrespondieren, die in der Verteilungsanforderungsnachricht enthalten ist, entsprechend der Beziehung in besagtem Speicherabschnitt.

4. Playbackgerät zum Empfangen und Wiederabspielen von Playbackdaten, die von einem Verteilungsgerät über ein Kommunikationsnetzwerk verteilt werden, wobei besagtes Verteilungsgerät angepasst ist zum Empfangen von Übertragungsdaten und zum Speichern der Übertragungsdaten als Playbackdaten, wobei besagtes Playbackgerät aufweist:
einen Verteilungsanforderungsabschnitt angepasst zum Übertragen, wenn eine Information über einen verteilbaren Bereich von Playbackdaten, die in dem Verteilungsgerät gespeichert ist, in einer Antwortnachricht von dem Verteilungsgerät ist, einer Information, die einen Bereich anzeigt, der gemeinsam für besagten verteilbaren Bereich ist, und eingesetzt wird zum Bezeichnen eines Verteilungsbereiches der gespeicherten Playbackdaten zu dem Verteilungsgerät über das Kommunikationsnetzwerk durch Einbinden besagter Information mit einer Verteilungsanforderungsnachricht;
einen Empfangsabschnitt angepasst zum Empfangen einer Antwortnachricht von dem Verteilungsgerät, die auf die Verteilungsanforderungsnachricht antwortet, die Playbackdaten enthält, die zu dem Verteilungsbereich, der durch die Verteilungsanforderungsnachricht bezeichnet wurde, korrespondieren;
einen Playbackabschnitt angepasst zum Wiederabspielen der Playbackdaten, die durch besagten Empfangsabschnitt empfangen wurden; und
einen Kontrollabschnitt angepasst zum Terminieren einer Zeit vom Auffordern des Verteilungsgerätes, Playbackdaten zu verteilen, bis zum Empfangen der Playbackdaten, die zu besagter Aufforderung korrespondieren, zum Korrigieren des verteilbaren Bereichs durch Verwendung eines Ergebnisses besagter Terminierung, und zum Benachrichtigen des Verteilungsanforderungsabschnittes, das Verteilungsgerät aufzufordern, Playbackdaten, die zu dem korrigierten verteilbaren Bereich korrespondieren, zu verteilen.

5. Playbackgerät nach Anspruch 4,
wobei besagter Kontrollabschnitt angepasst ist zum Erkennen eines Bereiches der Playbackdaten, die aufzufordern sind zum Verteilen von dem Verteilungsgerät von zumindest einem von Einheiten von Zeit und Einheiten von Informationsvolumina.

6. Playbackgerät nach Anspruch 5,
wobei
besagter Kontrollabschnitt angepasst ist, einen Offset zu den durch den Playbackabschnitt abzuspielenden Playbackdaten zu setzen, oder eine Verzögerung in die Playbackdaten einzufügen, die aufzufordern sind, entsprechend eines Typs eines speziellen Playbacks von dem Playbackgerät zu verteilen.

## Revendications

1. Appareil de distribution pour la distribution des données de lecture à un appareil de lecture par l'intermédiaire d'un réseau de communication, ledit appareil de distribution comprenant :
une section entrée adaptée afin de recevoir des données d'émission ;
une section stockage adaptée afin de stocker les données d'émission reçues par ladite section entrée en tant que données de lecture ;
une section réception de demande de distribution adaptée afin de recevoir, en provenance dudit appareil de lecture, un message de demande de distribution qui comprend des informations pour l'indication d'une zone de distribution des données de lecture par l'intermédiaire dudit réseau de communication ; et
une section distribution adaptée afin de distribuer, lorsqu'une information qui concerne une demande visant à informer l'appareil de lecture d'une zone pouvant être distribuée de données de lecture stockées par la section stockage, se trouve dans le message de demande de distribution acceptée, une information qui concerne ladite zone pouvant être distribuée et les données de lecture qui correspondent à la zone de distribution indiquée par l'information dans ledit message de demande de distribution acceptée, à l'appareil de lecture par l'intermédiaire du réseau de communication en incluant ladite information qui concerne la zone pouvant être distribuée et lesdites données de lecture qui correspondent à la zone de distribution dans un message de réponse qui répond audit message de demande de distribution acceptée.

2. Appareil de distribution selon la revendication 1, dans lequel :
ladite section stockage est adaptée afin de stocker l'information qui définit les données de lecture stockées dans l'au moins une des unités de temps et des unités de volumes d'informations et un emplacement stocké où sont stockées les données de lecture spécifiées par l'information avec l'établissement d'une correspondance entre l'information et l'emplacement stocké ; et
ladite section distribution est adaptée afin de spécifier dans ladite section stockage les données de lecture qui correspondent à l'information de façon à indiquer la zone de distribution incluse dans le message de demande de distribution selon la correspondance dans la section stockage.

3. Appareil de distribution selon la revendication 1, dans lequel :
les données de lecture sont des données codées MPEG ;
ladite section stockage est adaptée afin de stocker l'un d'une PCR (référence d'horloge de programme), d'une PTS (estampille temporelle de présentation) et d'une DTS (estampille temporelle de décodage), qui sont des informations temporelles incluses dans les données de lecture stockées, et un emplacement stocké où est stockée une valeur supérieure d'un GOP (groupe d'images) des données de lecture correspondant au temps indiqué par les informations temporelles, avec l'établissement d'une correspondance entre l'une de la PCR, de la PTS et de la DTS et l'emplacement stocké ; et
ladite section distribution est adaptée afin de spécifier dans ladite section stockage les données de lecture qui correspondent à l'information de façon à indiquer la zone de distribution incluse dans le message de demande de distribution selon la correspondance dans ladite section stockage.

4. Appareil de lecture pour la réception et la lecture des données de lecture distribuées à partir d'un appareil de distribution par l'intermédiaire d'un réseau de communication, ledit appareil de distribution étant adapté afin de recevoir des données d'émission et à stocker les données d'émission en tant que données de lecture, ledit appareil de lecture comprenant :
une section demande de distribution adaptée afin d'émettre, quand une information qui concerne une zone pouvant être distribuée de données de lecture stockées dans l'appareil de distribution, se trouve dans un message de réponse en provenance de l'appareil de distribution, une information qui indique une zone commune à ladite zone pouvant être distribuée et qui est utilisée de façon à indiquer une zone de distribution des données de lecture stockées à l'appareil de distribution par l'intermédiaire du réseau de communication en incluant ladite information à un message de demande de distribution ;
une section réception adaptée afin de recevoir un message de réponse en provenance de l'appareil de distribution qui répond au message de demande de distribution qui comprend des données de lecture qui correspondent à la zone de distribution indiquée par le message de demande de distribution ;
une section lecture adaptée afin de lire les données de lecture reçues par ladite section réception ; et
une section commande adaptée afin de chronométrer un temps à partir de l'instant où l'appareil de distribution est invité à distribuer les données de lecture, jusqu'à l'instant de la réception des données de lecture qui correspondent à ladite demande, de corriger la zone pouvant être distribuée en utilisant un résultat dudit chronométrage, et d'indiquer à la section demande de distribution de demander à l'appareil de distribution de distribuer les données de lecture qui correspondent à la zone pouvant être distribuée corrigée.

5. Appareil de lecture selon la revendication 4, dans lequel :
ladite section commande est adaptée afin de reconnaître une zone de données de lecture requises pour une distribution par l'appareil de distribution de l'une au moins des unités de temps et des unités de volumes d'informations.

6. Appareil de lecture selon la revendication 5, dans lequel :
ladite section commande est adaptée pour fixer un décalage aux données de lecture à lire par la section lecture, ou pour insérer un délai dans les données de lecture requises pour une distribution par l'appareil de distribution selon un type d'une lecture spéciale.
